# EUROPEAN PATENT SPECIFICATION

(11) **EP 3 374 580 B1**
(45) Date of publication and mention of the grant of the patent: **23.02.2022**
(21) Application number: 16866982.8
(22) Date of filing: 16.11.2016
(51) Int. Cl.: E04F 15/10, C09D 5/16, C09D 175/14, C09D 167/06, C08J 7/04

(54) **SURFACE COVERING HAVING AN IMPROVED WEAR LAYER**
OBERFLÄCHENBESCHICHTUNG MIT VERBESSERTER VERSCHLEISSSCHICHT
REVÊTEMENT DE SURFACE AYANT UNE COUCHE D'USURE AMÉLIORÉE

(30) Priority: 16.11.2015 US 201562255714 P
(43) Date of publication of application: 19.09.2018
(73) Proprietor: AFI Licensing LLC, Lancaster, PA 17604 (US)
(72) Inventor: SIGEL, Gary A., Columbia, PA 17512 (US); ROODMAN, Jacob A., Lancaster, PA 17603 (US); BAKER, Daniel P., Downingtown, PA 19335 (US); WINEY, Rebecca L., Lancaster, PA 17603 (US)
(74) Representative: Jenkins, Peter David
(86) International application number: PCT/US2016/062133
(87) International publication number: WO 2017/087436

(56) References cited:
- EP-A1- 1 045 009
- EP-A1- 1 382 625
- WO-A1-2014/113653
- GB-A- 2 285 012
- US-A- 6 162 842
- US-B2- 8 816 012

## Description

### FIELD OF INVENTION

The present invention relates to a floor covering, and in particular a floor covering comprising a coating layer.

### BACKGROUND

Heretofore, curable coating compositions have been used as overcoat materials to cover the surface of flooring products or various stain heavy surfaces to protect such a products or surfaces from tarnish by stain or dirt. Although there have been previous attempts at creating stain resistant coatings, there remains a need to provide a stain resistant flooring products that are not only dirt and stain resistant, but also have desirable attributes of conventional flooring products such as conventional maintenance attributes.

GB 2285012 A discloses a plastics floor covering comprising a wear surface layer formed of a thermoset resin formed by a cross-linking reaction between functional groups on the resin and a crosslinking agent. WO 2014/113653 A discloses a method for producing a wear layer on a substrate comprising the steps of applying a radiation curable composition comprising an acrylate component to a surface of a substrate, and irradiating the substrate to which said composition has been applied with a source of radiation having a wavelength from 100-280 nm, to form a wear layer. The product may be used as a flooring material, and may comprise acrylate resins such as a urethane acrylate and/or polyester acrylate and a reactive diluent.

### SUMMARY

The present invention is directed to a floor covering as recited in claim 1.

Preferred features of the floor covering of the present invention are defined in dependent claims 2 to 6.

### DETAILED DESCRIPTION

The present invention is directed to floor coverings comprising a substrate and a coating layer, in particular a stain resistant coating layer (also referred to as "coating layer"). The coating layer comprises a cross-linked polymer and optionally a matting agent. The coating layer may further comprise abrasion resistant particles. The cross-linked polymer is formed from a curable coating composition that comprises a mixture of an acrylate-functional polymeric resin and an acrylate-functional oligomer having an acrylate-functionality ranging from two to four.

Acrylate-functional polymeric resin that is used in the curable coating composition to form the cross-linked polymer may include acrylate functional polyester (as referred to as "polyester acrylate"), acrylate functional polyurethane (as referred to as "polyurethane acrylate"), acrylate functional polyether (as referred to as "polyether acrylate"), acrylate functional polysiloxane (as referred to as "polysiloxane acrylate"), acrylate functional polyolefin (as referred to as "polyolefin acrylate"), as well as blends and copolymers thereof.

The acrylate-functional polymeric resin may include a linear or branched polymer having at least one acrylate or (meth)acrylate functional group. In some embodiments, the polymer of the acrylate functional polymeric resin may comprise an acrylate groups, methacrylate groups, or a combination thereof. According to the present invention, the term "acrylate" may also refer methacrylate groups. The acrylate-functional polymeric resin may have between 1 to 10 free acrylate groups, methacrylate groups, or a combination thereof. The acrylate-functional polymeric resin may be present in an amount ranging from about 25 wt. % to about 55 wt. %, based on the total weight of the curable coating composition.

The acrylate-functional polyester may be the reaction product of polyester polyol and an carboxylic acid functional acrylate compound such as acrylic add, (meth)acrylic acid, or a combination thereof at a OH:COOH ratio of about 1:1. The polyester polyol may be a polyester diol having two hydroxyl groups present at terminal end of the polyester chain. In some embodiments, the polyester polyol may have a hydroxyl functionality ranging from 3 to 9, wherein the free hydroxyl groups are present at the terminal ends of the polyester chain or along the backbone of the polyester chain.

In non-limiting embodiments, the polyester polyol may be the reaction product of a hydroxyl-functional compound and a carboxylic acid functional compound. The hydroxyl-functional compound is present in a stoichiometric excess to the carboxylic-acid compound. In some embodiments the hydroxyl-functional compound is a polyol, such a diol or a tri-functional or higher polyol (e.g. triol, tetrol, etc.). In some embodiments the polyol may be aromatic, cycloaliphatic, aliphatic, or a combination thereof. In some embodiments the carboxylic acid-functional compound is diearboxylic acid, a polycarboxylic acid, or a combination thereof. In some embodiments, the dicarboxylic acid and polycarboxylic acid may be aliphatic, cycloaliphatic, aromatic, or a combination thereof.

In some embodiments the diol may be selected from alkylene glycols, such as ethylene glycol, propylene glycol, diethylene glycol, dipropylene glycol, triethylene glycol, tripropylene glycol, hexylene glycol, polyethylene glycol, polypropylene glycol and neopentyl glycol; hydrogenated bisphenol A; cyclohexanediol; propanediols including 1,2-propanediol, 1,3-propanediol, butyl ethyl propanediol, 2-methyl-1,3-propanediol, and 2-ethyl-2-butyl-1,3-propanediol; butanediols including 1,4-butanediol, 1,3-butanediol, and 2-ethyl-1,4-butanediol; pentanediols including trimethyl pentanediol and 2-methylpentanediol; cyclohexanedimethanol; hexanediols including 1,6-hexanediol; caprolactonediol (for example, the reaction product of epsilon-caprolactone and ethylene glycol); hydroxy-alkylated bisphenols; polyether glycols, for example, poly(oxytetramethylene) glycol. In some embodiments, the tri-functional or higher polyol may be selected from trimethylol propane, pentaerythritol, di-pentaerythritol, trimethylol ethane, trimethylol butane, dimethylol cyclohexane, glycerol and the like.

In some embodiments the dicarboxylic acid may be selected from adipic acid, azelaic acid, sebacic acid, succinic acid, glutaric acid, decanoic diacid, dodecanoic diacid, phthalic acid, isophthalic acid, 5-tert-butylisophthalic acid, tetrahydrophthalic acid, terephthalic acid, hexahydrophthalic acid, methylhexahydrophthalic acid, dimethyl terephthalate, 2,5-furandicarboxylic acid, 2,3-furandicarboxylic acid, 2,4-furandicarboxylic acid, 3,4-furandicarboxylic acid, 2,3,5-furantricarboxylic acid, 2,3,4,5-furantetracarboxylic acid, cyclohexane dicarboxylic acid, chlorendic anhydride, 1,3-cyclohexane dicarboxylic acid, 1,4-cyclohexane dicarboxylic acid, and anhydrides thereof, and mixtures thereof. In some embodiments the polycarboxylic acid may be selected front trimellitic add and anhydrides thereof.

The acrylate-functional polyester may have between 1 to 10 free acrylate groups, methacrylate groups, or a combination thereof.

The acrylate-functional polyurethane may be a linear or branched polymer having at least one functional group selected from an acrylate group or a (meth)acrylate group. In some embodiments, the acrylate-functional polyurethane has at least 2 to 9 functional groups selected from an acrylate group, a (meth)acrylate group, or a combination thereof. In some embodiments, the acrylate-functional polyurethane has between 2 and 4 functional groups selected from an acrylate group, (meth)acrylate group, or a combination thereof.

In some embodiments, the acrylate functional polyurethane may be the reaction product of a high molecular weight polyol and diisocyanate, polyisocyanate, or a combination thereof. The high molecular weight polyol may be selected from polyester polyol, polyether polyol, polyolefin polyol, and a combination thereof - the high molecular weight polyol having a hydroxyl functionality ranging from 2 to 9.

The polyester polyol used to create the acrylate-functional polyurethane may be the same as the polyester polyol that is used to form the acrylate functional polyester. In some embodiments, the polyether polyol may be selected from polyethylene oxide, polypropylene oxide, polytetrahydrofuran, and mixtures and copolymers thereof.

The high molecular weight polyol may be reacted with polyisocyanate, such as a diisocyanate, a tri-functional isocyanate (e.g. isocyanurate), higher functional polyisocyanates, or a combination thereof in an NCO:OH ratio ranging from about 2:1 to 4:1. The polyisocyanate may be selected from isophorone diisocyanate, 4,4'-dicyclohexylmethane-diisocyanate, and trimethylhexamethylene-diisocyanate, 1,6 hexamethylene diisocyanate, 2,2,4-trimethylhexamethylene diisocyanate, octadecylene diisocyanate and 1,4 cyclohexylene diisocyanate, toluene diisocyanate; methylenediphenyl diisocyanate: tetra methylxylene diisocyanate, and isocyanurates ("trimmers"), biurets ("dimers"), allophanates thereof, as well as mixtures thereof. The resulting reaction product is an isocyanate-terminated prepolymer.

The isocyanate-terminated prepolymer is then reacted with hydroxyl-functional acrylate compound in an NCO:OH ratio of about 1:1 to yield an acrylate or (meth)acrylate functional polyurethane. The hydroxyl-functional acrylate compounds may include hydroxyethyl acrylate, hydroxyethyl methacrylate, hydroxypropyl acrylate, hydroxypropyl methacrylate, hydroxybutyl acrylate, hydroxybutyl methacrylate, hydroxypentyl acrylate, hydroxypentyl methacrylate, hydroxyhexyl acrylate, hydroxyhexyl methacrylate, aminoethyl acrylate, and aminoethyl methacrylate, and a combination thereof.

The acrylate-functional polyurethane may have between 1 to 10 free acrylate groups, methacrylate groups, or a combination thereof.

The curable coating composition comprised in the floor covering of the present invention comprises an acrylate-functional oligomer having an acrylate functionality ranging from two to four. The curable coating composition may also further comprise an acrylate- functional oligomer or monomer which is mono-functional(i.e., having an acrylate functionality of one). The curable coating composition may comprise di-functional oligomers (i.e., having an acrylate functionality of two), tri-functional oligomers (i.e., having an acrylate functionality of three), and/or tetra-functional oligomers (i.e., having an acrylate functionality of four, and combinations thereof. The curable coating composition may also further comprise penta-functional oligomers (i.e., having an acrylate functionality of five).

Non-limiting examples of di-functional oligomer include ethylene glycol diacrylate, propylene glycol diacrylate, diethylene glycol diacrylate, dipropylene glycol diacrylate, triethylene glycol diacrylate, tripropylene glycol diacrylate, polyethylene glycol diacrylate, polypropylene glycol diacrylate, ethoxylated bisphenol A diacrylate, bisphenol A diglycidyl ether diacrylate, resorcinol digiycidyl ether diacrylate, 1,3-propanediol diacrylate, 1,4-butanediol diacrylate, 1,5-pentanediol diacrylate, 1,6-hexanediol diacrylate, neopentyl glycol diacrylate, cyclohexane dimethanol diacrylate, ethoxylated neopentyl glycol diacrylate, propoxylated neopentyl glycol diacrylate, ethoxylated cyclohexanedimethanol diacrylate, propoxylated cyclohexanedimethanol diacrylate, and mixtures thereof.

The di-functional oligomer may be present in an amount ranging from about 10 wt. % to about 30 wt. %. based on the total weight of the curable coating composition.

Non-limiting examples of tri-functional oligomers include trimethylol propane triacrylate, isocyanurate triacrylate, glycerol triacrylate, ethoxylated trimethylolpropane triacrylate, propoxylated trimethylolpropane triacrylate, tris (2-hydroxyethyl) isocyanurate triacrylate, ethoxylated glycerol triacrylate, propoxylated glycerol triacrylate, pentaerythritol triacrylate, melamine triacrylates, and mixtures thereof.

The tri-functional oligomer may be present in an amount ranging from about 2 wt. % to about 15 wt. %, based on the total weight of the curable coating composition.

Non-limiting examples of tetra-functional oligomers may include di-trimethylolpropane tetraacrylate, pentaerythritol tetraacrylate, alkoxylated pentaerythritol tetraacrylate, dipentaerythritol tetraacrylate, akoxylated dipentaerythritol tetraacrylate, and combinations thereof. The alkoxylation may be performed using ethylene oxide, propylene oxide, butylene oxide, or mixtures thereof. In some embodiments the degree of alkoxylation ranges from about 2 to 10. In some embodiments, the degree of alkoxylation ranges from about 4 to 6.

The tetra-functional oligomer may be present in an amount ranging from about 0 wt. % to about 10 wt. %, based on the total weight of the curable coating composition.

Non-limiting examples of acrylate functional monomers include alkyl acrylates having up to about 12 carbon atoms in the alkyl segment such as ethyl acrylate, butyl acrylate, 2-ethylhexyl acrylate, amyl acrylate, n-lauryl acrylate, nonyl acrylate, n-octyl acrylate, isooctyl acrylate, isodecyl acrylate, etc.; alkoxyalkyl acrylates such as methoxybutyl acrylate, ethoxyethyl acrylate, ethoxypropyl acrylate, etc.; hydroxyalkyl acrylates such as hydroxyethyl acrylate, hydroxybutyl acrylate, etc.; alkenyl acrylates such as trimethoxyallyloxymethyl acrylate, allyl acrylate, etc.; aralkyl acrylates such as phenoxyethyl acrylate, benzyl acrylate, etc.; cycloalkyl acrylates such as cyclohexyl acrylate, cyclopentyl acrylate, isobornyl acrylate, etc,; aminoalkyl acrylates such as diethylaminoethyl acrylate; cyclooalkyl acrylates such as cyanoethyl acrylate, cyanopropyl acrylate, etc.; carbamoyloxy alkyl acrylates such as 2-carbamoyloxyethyl acrylate, 2-carbamoyl-oxypropyl acrylate, N-methylcarbamoyloxyethyl acrylate, N-ethylcarbamoyloxymethyl acrylate, 2-(N-methylcarbamoyloxy)-ethyl acrylate, 2-(N-ethylcarbamoyloxy)ethyl acrylate, etc.; and the corresponding methacrylates. In some embodiments, the alkyl acrylates having up to about 12 carbon atoms in the alkyl segment may be used as a reactive solvent / diluent in the abrasions resistant coating layer. Other non-limiting examples of acrylate-functional monomer may include acrylic acid, methacrylic acid, ethyl acrylic acid, 2-phenoxyethyl acrylate; 2-phenoxyethyl methylacrylate; 2-phenoxyethyl ethylacrylate; tridecryl acrylate; tridecryl methylacrylate; tridecryl ethylacrylate; and mixtures thereof.

Non-limiting examples of the mono-functional oligomers include alkoxylated tetrahydrofurfuryl acrylate; alkoxylated tetrahydrofurfuryl methylacrylate; alkoxylated tetrahydrofurfuryl ethylacrylate; alkoxylated phenol acrylate; alkoxylated phenol methylacrylate; alkoxylated phenol ethylacrylate; alkoxylated nonylphenol acrylate; alkoxylated nonylphenol methylacrylate; alkoxylated nonylphenol ethylacrylate, and mixtures thereof. The alkoxylation may be performed using ethylene oxide, propylene oxide, butylene oxide, or mixtures thereof. In some embodiments, the degree of alkoxylation ranges from about 2 to 10. In some embodiments, the degree of alkoxylation ranges from about 4 to 6.

The acrylate-functional monomer or oligomer may further comprise an acrylate-functional silicon containing composition - such as a siloxane. Curable silicone acrylates are known and suitable silicone acrylates are disclosed, for example in U.S. Pat. 4,528,081 and US. Pat. 4,348,454, Suitable silicone acrylates include silicone acrylates having mono-, di-, and triacrylate moieties. Suitable silicone acrylates include, for example, Silcolease^{®} UV RCA 170 and UV Poly 110, available from Blue Star Co. Ltd, China; and Silmer ACR 02, Silmer ACR Di-10, Silmer ACR Di-50 and Silmer ACR Di-100, available from Siltech.

The mono-functional monomer and/or oligomer may be present in an amount ranging from about 5 wt. % to about 25 wt. %, based on the total weight of the curable coating composition. The silicone acrylate in particular may be present in an amount ranging from about 0 wt. % to 6 wt. % based on the total weight of the curable coating composition. In some embodiments, the silicone acrylate may be present in an amount ranging from about 1 wt. % to 5 wt. % based on the total weight of the curable coating composition. In some embodiments, the silicone acrylate may be present in an amount ranging from about 1 wt. % to 3.5 wt. %, based on the total weight of the curable coating composition.

The curable coating composition may further comprise photoinitiator to help facilitate the cross-linking of the curable coating composition. Non-limiting examples of photoinitiator may include a benzoin compound, an acetophenone compound, an acylphosphine oxide compound, a titanocene compound, a thioxanthone compound or a peroxide compound, or a photosensitizer such as an amine or a quinone. Specific examples photoinitiators include 1-hydroxycyclohexyl phenyl ketone, benzoin, benzoin methyl ether, benzoin ethyl ether, benzoin isopropyl ether, benzyl diphenyl sulfide, tetramethylthiuram monosulfide, azobisisobutyronitrile, dibenzyl, diacetyl and beta-chloroanthraquinone. In some embodiments, the photoinitiators are water soluble alkylphenone photoinitiators.

The curable coating composition may further comprise an amine synergist. Non-limiting examples of amine synergist may include diethylaminoethyle methacrylate, dimethylaminoethyl methacrylate, N-N-bis(2-hydroxyethyl)-P-toluidine, Ethyl-4-dimethylamino benzoate, 2-Ethyl hexyl 4-dimethylamino benzoate, as well as commercially available amine synergist, including Sartomer CN 371, CN373, CN383, CN384 and CN386; Allnex Ebecry P104 and Ebecry P115. The amine synergist may be present in an amount ranging from about 1 wt.% to about 5 wt.%, preferably about 3 wt.%, based on the total weight of the curable coating composition.

The curable coating composition may optionally further comprise other additives and fillers, such as abrasives, surfactant, abrasion resistant particles, pigments, tackifiers, matting agents, surfactant, fillers such as glass or polymeric bubbles or beads (which may be expanded or unexpanded), hydrophobic or hydrophilic silica, calcium carbonate, glass or synthetic fibers, blowing agents, toughening agents, reinforcing agents, fire retardants, antioxidants, and stabilizers. The additives are added in amounts sufficient to obtain the desired end properties.

Non-limiting examples of abrasion resistant particles may include particles of carborundum, quartz, silica, silicon carbide, diamond, aluminum oxide (alumina) having a particle size ranging from about 1 micron to about 30 micron,. The abrasion resistant particles may be present in an amount ranging from about 0 wt. % to about 20 wt. %.

Suitable surfactants include, but are not limited to, fluorinated alkyl esters, polyether modified polydimethylsiloxanes and fluorosurfactants, having the formula R_{f}CH₂CH₂O(CH₂CH₂O)ₓH, wherein R_{f}=F(CF₂CF₂)_{y}, x=0 to about 15, and y=1 to about 7. The surfactant may be present in an amount ranging from about 0.5 wt.% to about 2 wt.%, preferably about 0.8 wt.%, based on the total weight of the curable coating composition.

In some embodiments, the matting agent may comprise small particles of polyamide, fluoropolymer, silica, and combinations thereof. In some non-limiting embodiments, the polyamide powder may have a melting point up to 142°C and a particle size ranging from about 8 µm to 12 µm; preferably 10 µm. The polyamide powder may be polyamide-6,6, polyamide - 6,9; polyamide-6,10; polyamide-6,12; and polyamide-12;6/12 - preferably polyamide-6,12. The polyamide powder may be present in amount ranging from 5 wt. % to 10 wt. %, based on the total weight of the curable coating composition.

The curable coating composition may further comprise particles formed from a fluoro-carbon composition. The fluoro-carbon composition may function as a matting agent in the curable coating composition and resulting cross-linked polymer. The fluoro-carbon composition may comprise fluoropolymer - such as a fluoropolymer wax - which may be optionally blended with one or more polyolefin waxes. Suitable fluoropolymer waxes may have an average particle size ranging from about 0.5 µm to 30 µm, preferably from about 1 µm to 15 µm. The fluoropolymer waxes may be selected from polytetrafluoroethylene (PTFE), fluorinated ethylene propylene (FEP), perfluoroalkoxy polymer resin (PFA), ethylene tetrafluoroethylene (ETFE), ethylene chloro trifluoroethylene (ECTFE), polychlorotrifluoroethylene (PCTFE), polyvinylidene fluoride (PVDF), and combinations thereof. In some embodiments, the fluoropolymer is PTFE. Suitable polyolefin waxes may include polyethylene waxes and polypropylene waxes. The fluoro-carbon composition may comprise about 10 wt. % to about 90 wt. % of fluoropolymer wax and about 10 wt. % to about 90 wt. % of polyolefin wax. In some embodiments, the fluoro-carbon composition may comprise about 20 wt. % to about 30 wt. % of fluoropolymer wax and about 70 wt. % and 80 wt. % of polyolefin wax.

The fluoro-carbon composition may be present in an amount ranging from about 0 wt. % to 5 wt. %, based on the total weight of the curable coating composition. In some embodiments, the fluoro-carbon composition may be present in an amount ranging from about 1 wt. % to 3.5 wt. %, based on the total weight of the curable coating composition.

The amount of the silicon acrylate and the fluoropolymer may sum to a total that ranges from about 0 wt. % to about 5 wt. %, based on the total weight of the curable coating composition. The silicon acrylate may be present relative to the fluoropolymer in a weight ratio ranging from about 2:1 to 1:2, including 1:1.

In some embodiments, the silica may have a panicle size at d50 (50% distribution) ranging from about 3 µm to 7 µm, for example 5 µm, based on the total weight of the curable coating composition. The silica may be present in amount ranging from 1 wt. % to 3 wt. %, based on the total weight of the curable coating composition.

The cross-linked polymer may be formed by applying the curable coating composition to an upper surface of a substrate and exposing the curable coating composition to UV radiation (as discussed further herein). The cross-linked polymer has a glass transition temperature that is at least 40 °C.

The cross-linked polymer that is formed from the curable coating composition will have a degree of cross-linking that may depend upon the amount and frequency of pendent double bonds in each of the acrylate-functional compounds present in the curable coating composition. Specifically, the degree of cross-linking may change in the resulting cross-linked polymer depending on the relative amounts of mono, di, tri, tetra, and/or penta-functional acrylate monomer, oligomer and/or polymeric resin. As the functionality of each acrylate-functional compound increases in the curable coating composition, there is a corresponding increase in the degree of cross-linking in the resulting cross-linked polymer as there are more covalent bonds being created between reactive components. Furthermore, as molecular weight of each acrylate-functional compound decreases, there may be a corresponding increase in the degree of cross-linking in the resulting cross-linked polymer as the reduction in molecular weight in reactive compounds creates a corresponding increase in the frequency between covalent bonds between functional groups - thereby increasing cross-link density.

The di-functional oligomer may be present relative to the tri-functional oligomer in a weight ratio ranging from about 5:1 to about 2:1,. The di-functional oligomer may be present relative to the tetra-functional oligomer in a weight ratio ranging from about 6:1 to about 4:1,. The tri-functional oligomer may be present relative to the tetra-functional oligomer in a weight ratio ranging from about 2:1 to about 3:1,. The di-functional oligomer may be present relative to the mono-functional oligomer / monomer in a weight ratio ranging from about 1.5:1 to about 2:1,. The tri-functional oligomer may be present relative to the mono-functional oligomer / monomer in a weight ratio ranging from about 1:2 to about 1:4.

For the purpose of the present invention, cross-link density may be measured as the number of equivalent carbon-carbon bonds (also referred to as "C=C" bonds) created in the cross-linked polymer per unit of mass of the cross-linked polymer i.e. C=C eq / gm. The crosslink density of the cross-linked polymer comprised in the coating layer of the floor covering of the present invention is at least 0.0040 C=C eq/gm. The cross-link density of the cross-linked polymer may range from 0.0040 C=C eq/gm to 0.005 C=C eq/gm.

The floor covering of the present invention comprises a substrate covered with the coating layer. The cross-linked polymer may be present in the coating layer in an amount ranging from about 65 wt. % to about 99 wt. %, preferably from about 75 wt. % to about 85 wt. %. The resulting coating layer - which comprises the cross-linked polymer - exhibits superior stain resistance and cleanability as well as superior scratch, scuff, and stain resistance while also being able to sufficiently bond to the underlying substrates. Thus, the resulting floor covering comprising a substrate and the coating layer provides a superior flooring product at the top surface can be easily cleaned and kept aesthetically pleasing during prolonged while also maintaining the necessary bond strength necessary to keep the coating layer bonded to the substrate, thereby maintaining the floor covering intact as single multi-layered structure that can withstand the mechanical stress applied during normal use as a flooring material.

Furthermore, while the coating layer may include silicon and/or fluoro-carbon containing compounds (which may help cleanability) - including those that may be covalently bonded to the cross-linked polymer - in some embodiments the coating layer may be substantially free of the silicon and/or the fluoro-carbon containing compounds and still achieve the same, if not better, desired cleanability on the top surface of the floor covering,

The coating layer may be formed by the following methodology. The acrylate-functional compounds may be first combined and mixed together at room temperature with high speed agitation. For the purposes of the present specification the term high speed agitation means agitation with a blade at rotation speeds of at least 2,000 RPM. A dispersing agent may be added concurrently with the binder components or after the binder components have been blended together. The dispersing agents may be selected from acrylic block-copolymers, such as commercially available BYK Disperbyk 2008, Disperbyk 2155, Disperbyk 145 and Disperbyk 185, Lubrizol Solsperse 41000 and Solsperse 71000, and may an amount ranging from 0.1 wt. % to 1 wt. % based on the total weight of the curable coating composition.

Next, the photoinitiator is slowly added at room temperature. In some alternative embodiments, the photoinitiator may be added at 45°C with high speed agitation. Once the photoinitiator is entirely dissolved into the master batch mixture, matting agents and the abrasion resistant particles may be added. The matting agent and, if desired, fillers/abrasives are added to the master batch as the final ingredients. The matting agent should be added slowly to avoid a powder layer from forming and floating on top of blend. Once added, the binder, dispersing agent, photoinitiator, and matting agent are mixed with high speed agitation for a period ranging from about 5 to about 15 minutes, preferably about 10 minutes. During the agitations, the blade may be moved up and down to ensure proper mixing of the ingredients in the master batch. The temperature of the master batch may increase during agitation, therefore to prevent premature thermal curing of the binder, the master batch may be cooled during agitation.

The resulting blend is a curable coating composition and may have a viscosity ranging from 0.6 to 1.3 Pa.s (600 to 1300 cPs) at room temperature (23.3 °C (74 °F)) as measured by a Brookfield Viscometer using spindle #6 at 100 RPM. In some embodiments of the present invention, the viscosity allows the blend to be applied to a substrate by roll coating at room temperature. The substrates may selected from linoleum tile, ceramic tile, natural wood planks, engineered wood planks, vinyl tile - such as luxury vinyl tile ("LVT"), and resilient sheet - such as homogeneous or heterogeneous commercial resilient sheets and residential resilient sheets. After applying the blend to the substrate, the blend is exposed to UV radiation in air or a nitrogen environment.

The UV radiation includes UVA, UVB, UVC, and UVV sources. In some embodiments, the coating layer may be cured in a single or two-stage curing process. Non-limiting examples of UV partial cure radiation include UVA radiation of 0.189 J/cm²; UVB radiation of 0.163 J/cm²; UVC radiation of 0.01 J/cm²; and UVV radiation may be 0.092 J/cm². The pre-cure temperature may be 30°C - 40°C and the coating composition may be exposed to the UV radiation at a line speed ranging from 7.62 to 22.86 meters per minute (25 to 75 FPM). Non-limiting examples of UV full cure include UVA radiation of 1.006 J/cm²; UVB radiation of 0.886 J/cm²; UVC radiation of 0.126 J/cm²; and UVV radiation may be 0.504 J/cm². To fully cure, the coating composition may he exposed to the UV radiation at a line speed ranging from 7.62 to 22.86 meters per minute (25 to 75 FPM). The delay between the pre-cure / partial cure and the full cure ranges from about 3 seconds to about 10 seconds. The fully cured coating layer on the substrate forms the floor covering.

The floor covering of the present invention may consist of a single layer of the coating layer on a substrate. In other embodiments, the floor coating of the present invention may be a multi-layer floor covering. The multi-layer floor covering may be produced by first applying a first layer of the curable coating composition on a substrate by any suitable coating method, including roll coating. The first layer may then be partially or fully cured with, for example, UV radiation - forming a base coat. In other embodiments, the base coat may be a pre-existing base coat. Subsequently, a second layer of the coating composition may be applied to the top surface of the first layer by, for example, roll coating, thereby forming a multilayer coated surface. According to some embodiments, the second layer may then be partially or fully cured with UV radiation. One or more of additional coating layers may be applied on the second layer. Once the multilayer coated surface is formed, the multilayer coated surface can be fully cured, if any of the previously applied layers is only partially cured. The term partial curing as used herein refers to curing a coated layer to a non-fluid state (i.e., semi-solid or solid) that may be tacky to the touch.

In some embodiments, each fully cured coating layer may have an average coating thickness that ranges from about 2 µm to about 50 µm. In some embodiments, the fully cured coating layer may have an average coating thickness that ranges from about 4 µm to about 40 µm. In some embodiments, the fully cured coating layer may have an average coating thickness that ranges from about 6 µm to about 20 µm.

The present invention has been disclosed in conjunction with UV curable coating compositions for illustration purposes only, and other curable coating compositions, such as moisture curable urethane coating compositions, 2K urethane coating compositions, epoxy coating compositions and acrylic coating compositions, can be utilized.

The following examples were prepared in accordance with the present invention. The present invention is not limited to the examples described herein.

### EXAMPLES

### Example 1 (not according to the present invention)

A variety of coating layers were created and tested. The coating layer of Example 1 was produced according to the following procedure. Example 1 was prepared by first mixing together the following ingredients:
i. 17.02 grams of *Eternal EC6360* - polyester acrylate;
ii. 17.02 grains of *Allnex, E88602* - urethane acrylate;
iii. 4.77 grams of trimethylolpropane triacrylate;
iv. 13.62 grams of tricyclodecane dimethanol diacrylate;
v. 6,13 grams of hexanediol diacrylate
vi. 6.81 grams of isobornyl acrylate;
vii. 6.13 grams of 2-phenoxyethyl acrylate; and
viii. 2.72 grams of silicon acrylate - i.e. BlueStar Silicon, Scla UV RCA 170.

The relative amount of each reactive component can be summarized in Table 1 below. The polymeric acrylate refers to the polyester and urethane acrylates (i, ii). The tri-acrylate refers to the tri-functional acrylate oligomer (iii). The di-acrylate refers to the di-functional acrylate oligomers (iv, v). The mono-acrylate refers to the mono-functional acrylates (vi, vii, viii)

**Table 1**

| Polymeric Acrylate | Tri-acrylate | Di-acrylate | Mono-acrylate |
|---|---|---|---|
| 45.86 wt.% | 6.43 wt. % | 26.61 wt. % | 21.10 wt. % |

Next 3,09 grams of amine synergist (Sartomer CN 371) and 4.03 grams of photoinitiator were added with high speed agitation until completely dissolved in the mixture. The photoinitiator included 3.22 grams of diphenyl ketone and 0.81 grams of 1 -hydroxy-cyclohexyl phenyl ketone. Additional ingredients include 4.1 grams of filler and surfactant - including 3.71 grams of diamond particle having a particle size of about 6 microns. Finally, matting agent was added, which includes the following:
i. 7.07 grams of Arkema, Orgasol 3501 EX D NAT1 - a polyamide 6/12;
ii. 2.29 grams of MicroPowder Fluo HT having a particle size ranging from 2 µm to 4 µm.
iii. 5.21 grams of Acematt 3600 - a silica based matting agent having a particle size of about 5 µm.

The matting agent was added slowly, the mixture is agitated for at least 10 minutes with high speed agitation. After the high speed agitation, the resulting curable coating composition is discharged from the mixer and applied to a LVT substrate by roll coating. Once applied to the substrate, the curable coating composition is cured by UV radiation, thereby forming the coating layer of the floor covering.

The resulting coating layer of Example 1 has a Tg of 48.81 °C and a carbon-carbon double bond linkage per unit of mass (thereby indicating cross-link density of the cured coating layer) of 0.00364 eq/gm.

### Example 2

Example 2 was prepared by first mixing together the following ingredients
i. 13.42 grams of polyester acrylate
ii. 17.02 grams of urethane acrylate
iii. 5.37 grams of trimethylolpropane triacrylate;
iv. 15.34 grams of tricyclodecane dimethanol diacrylate;
v. 6.9 grams of hexanediol diacrylate;
vi. 7.67 grams of isobornyl acrylate;
vii. 6.9 grams of 2-phenoxythyl acrylate; and
viii. 1.53 grams of silicone acrylate.

The relative amount of each reactive component can be summarized in Table 2 below. The polymeric acrylate refers to the polyester and urethane acrylates (i, ii). The tri-acrylate refers to the trifunctional acrylate oligomer (iii), The di-acrylate refers to the di-functional acrylate oligomers (iv, v). The mono-acrylate refers to the mono-functional acrylates (vi, vii, viii)

**Table 2**

| Polymeric Acrylate | Tri-acrylate | Di-acrylate | Mono-acrylate |
|---|---|---|---|
| 41.05 wt.% | 7.24 wt. % | 29.99 wt. % | 21.71 wt. % |

Next 3.42 grams of amine synergist and 4.45 grams of photoinitiator were added with high speed agitation until completely dissolved in the mixture. The photoinitiator included 3.56 grams of diphenyl ketone and 0.89 grams of 1-hydroxy-cyclohexyl phenyl ketone. Additional ingredient includes 4.1 grams of diamond particle having a particle size of about 6 µm. Finally, matting agent was added, which includes the following:
i. 1.84 grams of Arkema, Orgasol 3501 EX D NAT 1 - a polyamide 6/12;
ii. 2.29 grams of Polyethylene/PTFE wax having a particle size ranging from 3.5 µm to 5.5 µm.
iii. 1.84 grams silica having a particle size of about 5 µm.

The matting agent was added slowly, the mixture is agitated for at least 10 minutes with high speed agitation. After the high speed agitation, the resulting curable coating composition is discharged from the mixer and applied to a substrate by roll coating. Once applied to the substrate, the curable coating composition is cured by UV radiation, thereby forming the coating layer of the floor covering.

The resulting coating layer of Example 2 has a Tg of 47.8 °C and a carbon-carbon double bond linkage per unit of mass (thereby indicating cross-link density of the cured coating layer) of 0.00436 eq/gm.

### Example 3

Example 3 was prepared by first mixing together the following ingredients
i. 22.61 grams of *Eternal EC6360* - polyester acrylate;
ii. 22.61 grams of *Allnex, EB8602* - urethane acrylate;
iii. 4.87 grams of trimethylolpropane triacrylate;
iv. 6,26 grams of hexanediol diacrylate;
v. 13.92 grams of tricyclodecane dimethanol diacrylate;
vi. 6.96 grains of isobornyl acrylate; and
vii. 6.26 grams of 2-phenoxythyl acrylate.

The relative amount of each reactive component can be summarized in Table 3 below. The polymeric acrylate refers to the polyester and urethane acrylates (i, ii). The tri-acrylate refers to the tri-functional acrylate oligomer (iii).. The di-acrylate refers to the di-functional acrylate oligomers (iv, v). The mono-acrylate refers to the mono-functional acrylates (vi, vii)

**Table 3**

| Polymeric Acrylate | Tri-acrylate | Di-acrylate | Mono-acrylate |
|---|---|---|---|
| 54.16 wt.% | 5.83 wt. % | 24.17 wt. % | 15.83 wt. % |

Next 3.46 grams of amine synergist and 4.5 grams of photoinitiator were added with high speed agitation until completely dissolved in the mixture. The photoinitiator included 3.6 grams of diphenyl ketone and 0.9 grams of 1-hydroxy-cyclohexyl phenyl ketone. Additional ingredients include 4.54 grams of filler and surfactant - including 4.15 grams of diamond particle having a particle size of about 6 microns. Finally, matting agent was added, which includes the following:
i. 1.01 grams of Arkema, Orgasol 3501 EX D NAT 1 -- a polyamide 6/12;
ii. ii. 3.0 grams of Acematt 3600 - a silica based matting agent having a particle size of about 5 µm.

The matting agent was added slowly, the mixture is agitated for at least 10 minutes with high speed agitation. After the high speed agitation, the resulting curable coating composition is discharged from the mixer and applied to a substrate by roll coating. Once applied to the substrate, the curable coating composition is cured by UV radiation, thereby forming the coating layer of the floor covering,

The resulting coating layer of Example 3 has a Tg of 48.52 °C and a carbon-carbon double bond linkage per unit of mass (thereby indicating cross-link density of the cured coating layer) of 0.00405 eq/gm.

### Example 4

Example 4 was prepared by first mixing together the following ingredients
i. 22.15 grams of *Eternal EC6360* - polyester acrylate;
ii. 22.15 grams of *Allnex, EB8602* - urethane acrylate;
iii. 4.77 grams of trimethylolpropane triacrylate;
iv. 13.63 grams of tricyclodecane dimethanol diacrylate;
v. 6.13 grams of hexanediol diacrylate;
vi. 6.81 grams of isobornyl acrylate; and
vii. 6.13 grams of 2-phenoxythyl acrylate.

The relative amount of each reactive component can be summarized in Table 4 below. The polymeric acrylate refers to the polyester and urethane acrylates (i, ii). The tri-acrylate refers to the tri-functional acrylate oligomer (iii). The di-acrylate refers to the di-functional acrylate oligomers (iv, v). The mono-acrylate refers to the mono-functional acrylates (vi, vii)

**Table 4**

| Polymeric Acrylate | Tri-acrylate | Di-acrylate | Mono-acryhte |
|---|---|---|---|
| 56.22 wt.% | 6.05 wt % | 25.08 wt. % | 12.65 wt. % |

Next 3.38 grams of amine synergist and 4.4 grams of photoinitiator were added with high speed agitation until completely dissolved in the mixture. The photoinitiator included 3.52 grams of diphenyl ketone and 0.88 grams of 1-hydroxy-cyclohexyl phenyl ketone. Additional ingredients include 4.45 grams of filler and surfactant - including 4.06 grams of diamond particle having a particle size of about 6 microns. Finally, matting agent was added, which includes the following:
i. 0.99 grams of Arkema, Orgasol 3501 EX D NAT 1 - a polyamide 6/12;
ii. 5.0 grams of Acematt 3600 - a silica based matting agent having a particle size of about 5 µm.

The matting agent was added slowly, the mixture is agitated for at least 10 minutes with high speed agitation. After the high speed agitation, the resulting curable coating composition is discharged from the mixer and applied to a substrate by roll coating. Once applied to the substrate, the curable coating composition is cured by UV radiation, thereby forming the coating layer of the floor covering.

The resulting coating layer of Example 4 has a Tg of 48.71 °C and a carbon-carbon double bond linkage per unit of mass (thereby indicating cross-link density of the cured coating layer) of 0.00396 eq/gm.

### Example 5

Example 5 was prepared by first mixing together the following ingredients
i. 7.23 grams of *Eternal EC6360* - polyester acrylate;
ii. 16.1 grams of *Allnex, EB8602* - urethane acrylate;
iii. 5.36 grams of pentaerythritol tetra-acrylate;
iv. 5.36 grams of pentaerythritol triacrylate;
v. 5.78 grams of trimethylolpropane triacrylate;
vi. 16.51 grams of tricyclodecane dimethanol diacrylate;
vii. 7.43 grams of hexanediol diacrylate;
viii. 8:26 grams of isobornyl acrylate; and
ix. 7.43 grams of 2-phenoxythyl acrylate.

The relative amount of each reactive component can be summarized in Table 5 below. The polymeric acrylate refers to the polyester and urethane acrylates (i, ii). The tetra-acrylate refers to the tetra-functional acrylate oligomer (iii). The tri-acrylate refers to the tri-functional acrylate oligomers (iv, v). The di-acrylate refers to the di-functional acrylate oligomers (vi, vii). The mono-acrylate refers to the mono-functional acrylates (viii, ix)

**Table 5**

| Polymeric Acrylate | Tetra-acrylate | Tri-acrylate | Di-acrylate | Mono-acrylate |
|---|---|---|---|---|
| 29.36 wt. % | 6.75 wt. % | 14.02 wt. % | 30.13 wt. % | 19.75 wt. % |

Next 3.46 grams of amine synergist and 4.5 grams of photoinitiator were added with high speed agitation until completely dissolved in the mixture. The photoinitiator included 3.6 grams of diphenyl ketone and 0.9 grams of 1 -hydroxy-cyclohexyl phenyl ketone. Additional ingredients include 4.54 grams of filler and surfactant including 4.15 grams of diamond particle having a particle size of about 6 microns. Finally, matting agent was added, which includes the following:
i. 1.01 grams of Arkema, Orgasol 3501 EX D NAT1 - a polyamide 6/12;
ii. 7.0 grams of Acematt 3600 a silica based matting agent having a particle size of about 5 µm.

The matting agent was added slowly, the mixture is agitated for at least 10 minutes with high speed agitation. After the high speed agitation, the resulting curable coating composition is discharged from the mixer and applied to a substrate by roil coating. Once applied to the substrate, the curable coating composition is cured by UV radiation, thereby forming the coating layer of the floor covering.

The resulting coating layer of Example 5 has a Tg of 48.71 °C and a carbon-carbon double bond linkage per unit of mass (thereby indicating cross-link density of the cured coating layer) of 0.00482 eq/gm.

### Example 6

Example 6 was prepared by first mixing together the following ingredients
i. 7.08 grams of *Eternal EC6360* - polyester acrylate;
ii. 15.74 grams of *Allnex, EB8602* - urethane acrylate;
iii. 5.25 grams of pentaerythritol tetra-acrylate;
iv. 5.25 grams of pentaerythritol triacrylate;
v. 5.85 grams of trimethylolpropane triacrylate;
vi. 16.14 grams of tricyclodecane dimethanol diacrylate;
vii. 7.26 grams of hexanediol diacrylate;
viii. 8.07 grams of isobornyl acrylate; and
ix. 7.28 grams of 2-phenoxythyl acrylate.

The relative amount of each reactive component can be summarized in Table 6 below. The polymeric acrylate refers to the polyester and urethane acrylates (i, ii). The tetra-acrylate refers to the tetra-functional acrylate oligomer (iii). The tri-acrylate refers to the tri-functional acrylate oligomers (iv, v). The di-acrylate refers to the di-functional acrylate oligomers (vi, vii). The mono-acrylate refers to the mono-functional acrylates (viii, ix)

**Table 6**

| Polymeric Acrylate | Tetra-acrylate | Trt-acrylate | Di-acrylate | Mono-acrylate |
|---|---|---|---|---|
| 29.35 wt. % | 6.76 wt. % | 14.03 wt. % | 30.12 wt. % | 19.73 wt. % |

Next 3.38 grams of amine synergist and 4.4 grams of photoinitiator were added with high speed agitation until completely dissolved in the mixture. The photoinitiator included 3.52 grams of diphenyl ketone and 0.88 grams of 1-hydroxy-cyclohexyl phenyl ketone. Additional ingredients include 4.56 grams of filler and surfactant - including 4.06 grams of diamond particle having a particle size of about 6 microns. Finally, matting agent was added, which includes the following:
i. 0.99 grams of Arkema, Orgasol 3501 EX D NAT1 - a polyamide 6/12;
ii. 9.0 grams of Acematt 3600 - a silica based matting agent having a particle size of about 5 µm.

The matting agent was added slowly, the mixture is agitated for at least 10 minutes with high speed agitation. After the high speed agitation, the resulting curable coating composition is discharged front the mixer and applied to a substrate by roll coating. Once applied to the substrate, the curable coating composition is cured by UV radiation, thereby forming the coating layer of the floor covering,

The resulting coating layer of Example 6 has a Tg of 48.52 °C and a carbon-carbon double bond linkage per unit of mass (thereby indicating cross-link density of the cured coating layer) of 0.00452 eq/gm.

### Comparative Example 1

Comparative Example 1 was prepared by first mixing together the following ingredients
i. 248.07 grams of urethane acrylate
ii. 139.54 grams of ethoxylated trimethylol propane triacrylate
iii. 1.0 gram of glycol polysiloxane;

The urethane acrylate was produced by reacting 34.38 of polyester polyol with 87.41 grams of HDI trimer (Desmodur N-3300) to create an isocyanate-terminated polyester prepolymer. The prepolymer is then reacted with 126.28 grams of caprolactone modified hydroxyl acrylate monomer (Tone M-100) having two repeating units of caprolactone to create the acrylate functional terminated polyester based urethane ("urethane acrylate").

The relative amount of each reactive component can be summarized in Table 7 below. The polymeric acrylate refers to the urethane acrylate (i). The tri-acrylate refers to the tri- functionai acrylate oligomers (ii). The polysiloxane refers to compound iii.

**Table 7**

| Polymeric Acrylate | Tri-acrylate | Polysiloxane |
|---|---|---|
| 63.83 wt. % | 35.9 wt. % | 0.25 wt. % |

Next 3.88 grams of diphenyl ketone photo initiator were added with high speed agitation until completely dissolved in the mixture. After the high speed agitation, the resulting curable coating composition is discharged from the mixer and applied to a flexible vinyl substrate by roll coating. Once applied to the substrate, the curable coating composition is cured by UV radiation, thereby forming the coating layer of the floor covering. [§1)96] The resulting coating layer of Comparative Example 1 has a Tg of 18 °C and a carbon-carbon double bond linkage per unit of mass (thereby indicating cross-link density of the cured coating layer) of 0.00350 eq/gm.

### Comparative Example 2

Comparative Example 2 was prepared by first mixing together the following ingredients
i. 216.62 grams of urethane acrylate
ii. 239.99 grams of ethoxylated trimethylol propane triacrylate;
iii. 1.72 gram of glycol polysiloxane;

The urethane acrylate was produced according to the methodology set forth in Comparative Example 1. The relative amount of each reactive component can be summarized in Table 8 below. The polymeric acrylate refers to the urethane acrylate (i). The tri-acrylate refers to the tri-functional acrylate oligomers (ii). The polysiloxane refers to compound iii.

**Table 8**

| Polymeric Acrylate | Tri-acryiare | Polysiloxane |
|---|---|---|
| 63.83 wt. % | 35.9 wt. % | 0.25 wt. % |

Next 6.67 grams of diphenyl ketone photoinitiator and 15 grams of benzophenone photoinitiator were added with high speed agitation until completely dissolved in the mixture. Finally, matting agent was added, which includes the following:
i. 75 grams of Acematt 3600 - a silica based matting agent having a particle size of about 6.3 µm.

The matting agent was added slowly, the mixture is agitated for at least 10 minutes with high speed agitation. After the high speed agitation, the resulting curable coating composition is discharged from the mixer and applied to a substrate by roll coating. Once applied to the substrate, the curable coating composition is cured by UV radiation, thereby forming the coating layer of the floor covering.

The resulting coating layer of Comparative Example 2 has a Tg of 18 °C and a carbon-carbon double bond linkage per unit of mass (thereby indicating cross-link density of the cured coating layer) of 0.00309 eq/gm.

Each coating layer was when tested for stain resistance by first measuring the initial yellow color value {b^{∗}} of the coating layer atop the corresponding substrate. Next, iodine was applied to each coating layer and left for an average of 3 minutes and then wiped away. After wiping away the iodine stain, the color value for each coating layer atop the corresponding substrate was again measured. The resulting change in color value (Δb = final color value - initial color value) was then recorded and compared against each lest sample - with a corresponding assignment of pass or fail based on the total amount of color change for each example. The results are provided in Table 9.

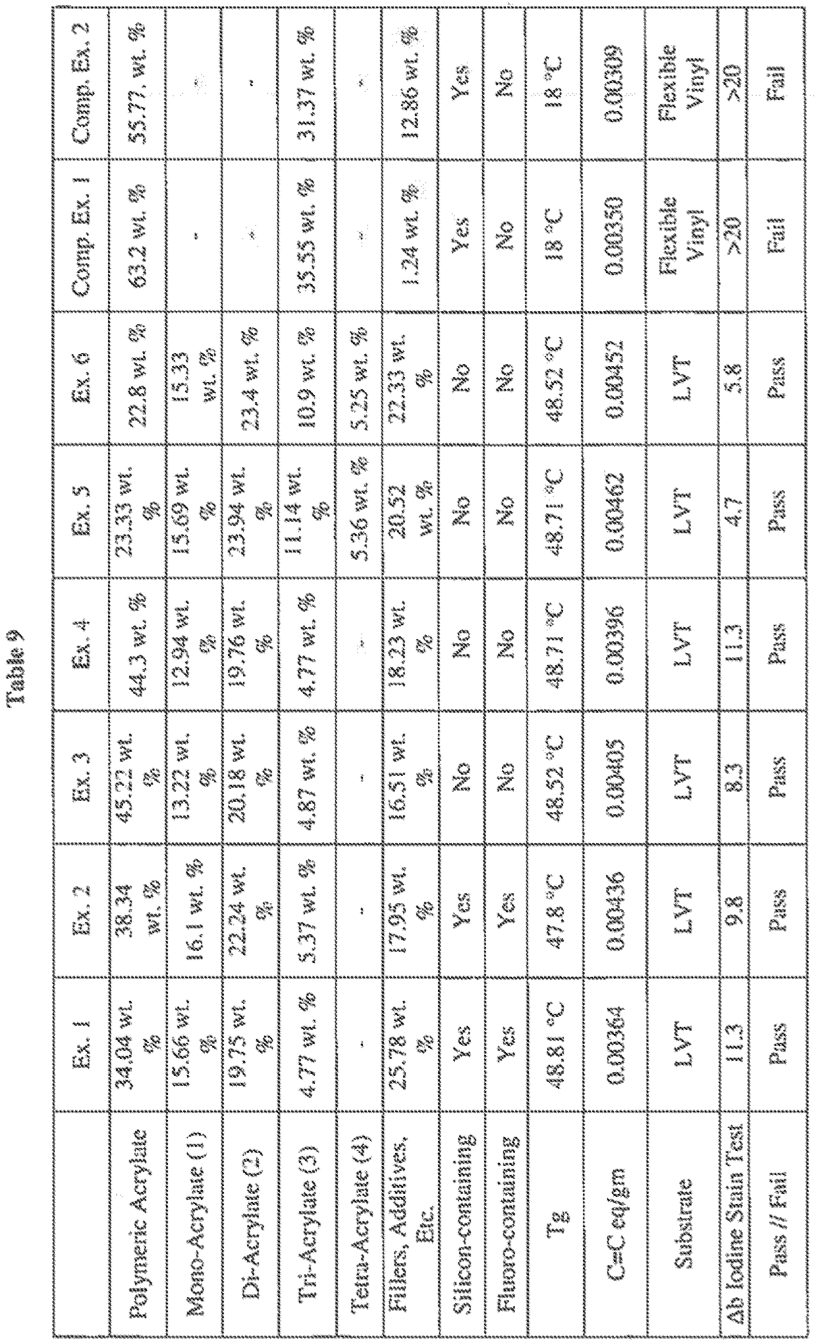

## Claims

1. A floor covering comprising:
a substrate, and
a coating layer comprising a cross-linked polymer formed from a curable coating composition comprising a mixture of:
an acrylate-functional polymeric resin;
an acrylate-functional oligomer having an acrylate-functionality ranging from two to four;
wherein the cross-linked polymer has a glass transition temperature of at least 40 °C and has a cross-link density of at least 0.004 C=C eq/gm as measured from the polymerization of carbon-carbon double bonds in the curable coating composition.

2. The floor covering of claim 1, wherein the glass transition temperature of the cross-linked polymer is at least 45 °C.

3. The floor covering of claim 1, wherein the acrylate-functional polymeric resin is selected from polyester acrylate resin, urethane acrylate resin, and a combination thereof.

4. The floor covering of claim 1, wherein the acrylate-functional oligomer comprises a first acrylate oligomer having an acrylate functionality of two and a second acrylate oligomer having an acrylate functionality of three; wherein the first acrylate oligomer and the second acrylate oligomer are present in the curable coating composition in a weight ratio ranging from 2:1 to 5:1, optionally wherein the first acrylate oligomer and the acrylate-functional polymeric resin are present in the curable coating composition in a weight ratio ranging from 0.5:1 to 2:1

5. The floor covering of claim 1 wherein acrylate-functional oligomer further comprises a third acrylate having an acrylate functionality of four, and the first acrylate oligomer and the third acrylate oligomer are present in the curable coating composition in a weight ratio ranging from 4:1 to 6:1.

6. The floor covering of claim 1, wherein the substrate is a vinyl tile.

## Patentansprüche

1. Bodenbelag, aufweisend:
ein Substrat, und
eine Beschichtungsschicht mit einem vernetzten Polymer, das aus einer härtbaren Beschichtungszusammensetzung gebildet ist mit einer Mischung aus:
einem Acrylatfunktions-Polymerharz;
einem Acrylatfunktions-Oligomer mit einer Acrylat-Funktionalität im Bereich von zwei bis vier;
wobei das vernetzte Polymer eine Glasübergangstemperatur von wenigstens 40°C hat und eine Vernetzungsdichte von wenigstens 0,004 C=C eq/gm, gemessen aus der Polymerisation von Kohlenstoff-Kohlenstoff-Doppelbindungen in der härtbaren Beschichtungszusammensetzung, hat.

2. Bodenbelag nach Anspruch 1, bei welchem die Glasübergangstemperatur des vernetzten Polymers wenigstens 45°C beträgt.

3. Bodenbelag nach Anspruch 1, bei welchem das Acrylatfunktions-Polymerharz ausgewählt ist aus Polyesteracrylatharz, Urethanacrylatharz und einer Kombination davon.

4. Bodenbelag nach Anspruch 1, bei welchem das Acrylatfunktions-Oligomer ein erstes Acrylatoligomer mit einer Acrylatfunktionalität von zwei und ein zweites Acrylatoligomer mit einer Acrylatfunktionalität von drei aufweist; wobei das erste Acrylatoligomer und das zweite Acrylatoligomer in der härtbaren Beschichtungszusammensetzung in einem Gewichtsverhältnis im Bereich von 2:1 bis 5:1 vorhanden sind, wobei optional das erste Acrylatoligomer und das Acrylatfunktions-Polymerharz in der härtbaren Beschichtungszusammensetzung in einem Gewichtsverhältnis im Bereich von 0,5:1 bis 2:1 vorhanden sind.

5. Bodenbelag nach Anspruch 1, bei welchem das Acrylatfunktions-Oligomer ferner ein drittes Oligomer mit einer Acrylatfunktionalität von vier aufweist, und das erste Acrylatoligomer und das dritte Acrylatoligomer in der härtbaren Beschichtungszusammensetzung in einem Gewichtsverhältnis im Bereich von 4:1 bis 6:1 vorhanden sind.

6. Bodenbelag nach Anspruch 1, bei welchem das Substrat eine Vinylfliese ist.

## Revendications

1. Revêtement de sol comprenant :
un substrat, et
une couche de revêtement comprenant un polymère réticulé formé à partir d'une composition de revêtement durcissable comprenant un mélange de :
une résine polymère à fonction acrylate ;
un oligomère à fonction acrylate ayant une fonctionnalité acrylate allant de deux à quatre,
dans lequel le polymère réticulé a une température de transition vitreuse d'au moins 40 °C et a une densité de réticulation d'au moins 0,004 de liaisons C=C équivalentes / gramme telle que mesurée à partir de la polymérisation de doubles liaisons carbone-carbone dans la composition de revêtement durcissable.

2. Revêtement de sol selon la revendication 1, dans lequel la température de transition vitreuse du polymère réticulé est d'au moins 45 °C.

3. Revêtement de sol selon la revendication 1, dans lequel la résine polymère à fonction acrylate est sélectionnée parmi une résine polyester acrylate, une résine d'uréthane acrylate et une combinaison de celles-ci.

4. Revêtement de sol selon la revendication 1, dans lequel l'oligomère à fonction acrylate comprend un premier oligomère acrylate ayant une fonctionnalité en acrylate de deux et un deuxième oligomère acrylate ayant une fonctionnalité en acrylate de trois, le premier oligomère acrylate et le deuxième oligomère acrylate étant présents dans la composition de revêtement durcissable dans un rapport pondéral allant de 2:1 à 5:1, éventuellement le premier oligomère acrylate et la résine polymère à fonction acrylate étant présents dans la composition de revêtement durcissable dans un rapport pondéral allant de 0,5:1 à 2:1.

5. Revêtement de sol selon la revendication 1, dans lequel l'oligomère à fonction acrylate comprend en outre un troisième acrylate ayant une fonctionnalité en acrylate de quatre, et dans lequel le premier oligomère acrylate et le troisième oligomère acrylate sont présents dans la composition de revêtement durcissable dans un rapport pondéral allant de 4:1 à 6:1.

6. Revêtement de sol selon la revendication 1, dans lequel le substrat est un carreau de vinyle.
